# EUROPEAN PATENT APPLICATION

(11) **EP 1 962 174 A2**
(43) Date of publication of application: **27.08.2008**
(21) Application number: 08250591.8
(22) Date of filing: 20.02.2008
(51) Int. Cl.: G06F 3/033, G06F 3/048

(54) **Data broadcast receiving apparatus, method of receiving data broadcast, and computer readable medium storing data broadcast receiving program**

(30) Priority: 20.02.2007 JP 2007039738
(71) Applicant: Buffalo Inc., Nagoya-shi, Aichi 457-8520 (JP)
(72) Inventor: Yamagishi, Yoshikazu, c/o Buffalo Inc., Nagoya-shi, Aichi 457-8520 (JP)
(74) Representative: Cloughley, Peter Andrew

(57) **Abstract**

A data broadcast receiving apparatus is configured to provide interactive display of data broadcast in response to an input operation on a personal computer. The personal computer is connectable to a display device and a mouse including a wheel. The digital data receiving apparatus is configured to provide a display area reserved for a display of the data broadcast and an operation area reserved for a display of operation buttons, which are defined on a display screen. The digital data receiving apparatus is configured to detect the input operation from the mouse to perform the interactive display based on a description of data contained in the data broadcast in response to the input operation of the mouse. The scroll operation of the wheel of the mouse is assigned to operations on at least one of the operation buttons.

## Description

### CROSS-REFERE14CE TO RELATED APPLICATIONS

This application is based upon and claims priority from Japanese Patent Application No. 2007-039739, filed on February 20, 2007, the entire contents of which are incorporated herein by reference.

### BACKGROUND

1. Field of the Invention

The present invention relates to a data broadcast receiving apparatus, a method of receiving data broadcast, and a computer readable medium storing a data broadcast receiving program.

2. Description of the Related Art

In Japan, the ISDB-T (Integrated Service Digital Broadeasting - Terrestrial) is adopted as a standard of terrestrial digital broadcast. In the terrestrial digital broadcast under the ISDB-T, a broadcast frame includes twelve segments necessary to present normal display and one additional segment. Normally, images broadcast or data broadcast using the one segment is called one-segment broadcast.

The one-segment broadcast provides data broadcast such as video broadcast suitable for cellular phones and/or image broadcast or data broadcast complied with a predetermined standard such as a BML (Broadcast Markup Language) standard. Digital contents contained in a data file complied with the BML standard can be interactively enjoyed by using a BML browser.

On the other hand, although the one-segment broadcast is delivered in the assumption that the broadcast is viewed on cellular phones with an easy user operation, the one-segment broadcast may also be displayed on a personal computer. On the personal computer, various operation buttons corresponding to the operation buttons provided in the cellular phone as hardware are displayed on a screen and the various operation buttons are operated using a keyboard or a mouse.

### SUMMARY

In a personal computer which exhibits interactive display, the user can input operations by (1) clicking a numeral display area of a menu by use of a mouse and (2) clicking an up and down cursor display area by use of the mouse.

However, these operations may have the following problens.

In the operation (1), an operation of presenting the next screen cannot be made. In the operation (2), the clicking of the numeral display area of the menu cannot be intuitively made on the personal computer. Moreover, a user is rather obliged to click the up and down cursor display area presented below the numeral display area. In addition, these operations are troublesome and are not intuitive.

One aspect of the invention is conceived in consideration of the above-described situations has an object to provide a data broadcast receiving apparatus, a data broadcast receiving method, and a computer readable medium storing a data broadcast receiving program, which enable an intuitive operation and solve the troublesomeness.

According to a first aspect of the invention, there is provided a data broadcast receiving apparatus configured to receive data broadcast and provide interactive display in response to an input operation on a personal computer, the personal computer connectable to a mouse and a display device having a display screen, the mouse configured to obtain the input operation and including a mouse button and a wheel that is operable to input scroll operation, said digital data receiving apparatus comprising: a display processing unit configured to provide a display area and an operation area defined on the display screen, the display area reserved for a display of the data broadcast and the operation area reserved for a display of operation buttons; and an input operation detecting unit configured to detect the input operation from the mouse to perform an interactive display based on a description of data contained in the data broadcast in response to the input operation of the mouse, wherein the scroll operation of the wheel of the mouse is assigned to operations on at least one of the operation buttons.

According to a second aspect of the invention, there is provided a data broadcast receiving method capable of receiving data broadcast and providing interactive display in response to an input operation on a personal computer, the personal computer connectable to a mouse and a display device having a display screen, the mouse configured to obtain the input operation and including a mouse button and a wheel that is operable to input scroll operation, said digital data receiving method comprising: providing a display area and an operation area defined on the display screen, the display area reserved for a display of the data broadcast and the operation area reserved for a display of operation buttons; and performing an interactive display based on a description of data contained in the data broadcast in response to the input operation of the mouse, wherein, when the scroll operation of the wheel is detected, the scroll operation of the wheel of the mouse is processed as operations on at least one of the operation buttons.

According to a third aspect of the invention, there is provided a computer readable medium storing a data broadcast receiving program for receiving data broadcast and providing interactive display in response to an input operation on a personal computer, the personal computer connectable to a mouse and a display device having a display screen, the mouse configured to obtain the input operation and including a mouse button and a wheel that is operable to input scroll operation, said data broadcast receiving program enabling the personal computer to execute: providing a display area and an operation area defined on the display screen, the display area reserved for a display of the data broadcast and the operation area reserved for a display of operation buttons; and performing an interactive display based on a description of data contained in the data broadcast in response to the input operation of the mouse, wherein, when the scroll operation of the wheel is defected, the scroll operation of the wheel of the mouse is processed as operations on at least one of the operation buttons.

One aspect of the invention provides a data broadcast receiving apparatus capable of exhibiting interactive display in a more intuitive manner by allowing an input operation to a menu display such that displayed up and down cursor buttons can be operated based on a wheel operation of a mouse wheel in addition to a click operation of the mouse for the displayed up and down cursor buttons.

### BRIEF DESCRIPTION OF THE DRAWINGS

Fig. 1 is a block diagram illustrating a one-segment data receiving apparatus according to an embodiment of the invention;

Fig. 2 is a schematic block diagram illustrating a personal computer to which the one-segment data broadcast receiving apparatus is applied according to the embodiment of the invention;

Fig. 3 is a diagram illustrating correspondence of a TS (Transport Stream) packet of a TS stream and PES (Packetalized Elementary Stream) packet;

Fig. 4 is a top view illustrating a mouse;

Fig. 5 is a flowchart corresponding to a program for processing an interface of the mouse; and

Fig. 6 is a schematic diagram illustrating a digital content reproducing and storing system according to another embodiment of the invention.

### DETAILED DESCRIPTION OF EMBODIMENTS

Hereinafter, an embodiment of the invention will be described with reference to the drawings.

In the embodiment, a one-segment data receiving apparatus used in the system complied with the ISDB-T is explained as an example of a data broadcast receiving apparatus. However, the data broadcast receiving apparatus is not limited to the one-segment data receiving apparatus and may be applicable to other data communication systems using digital data complied with predetermined standards such as MPEG-4, or any other data broadcast system complied with predetermined standards, such as ATSC (Advanced Television Standard Committee) Standards generally adopted in North America, DVB (Digital Video Broadcasting) generally adopted in Europe, and DTMB (Digital Terrestrial Multimedia Broadcast) generally adopted in China.

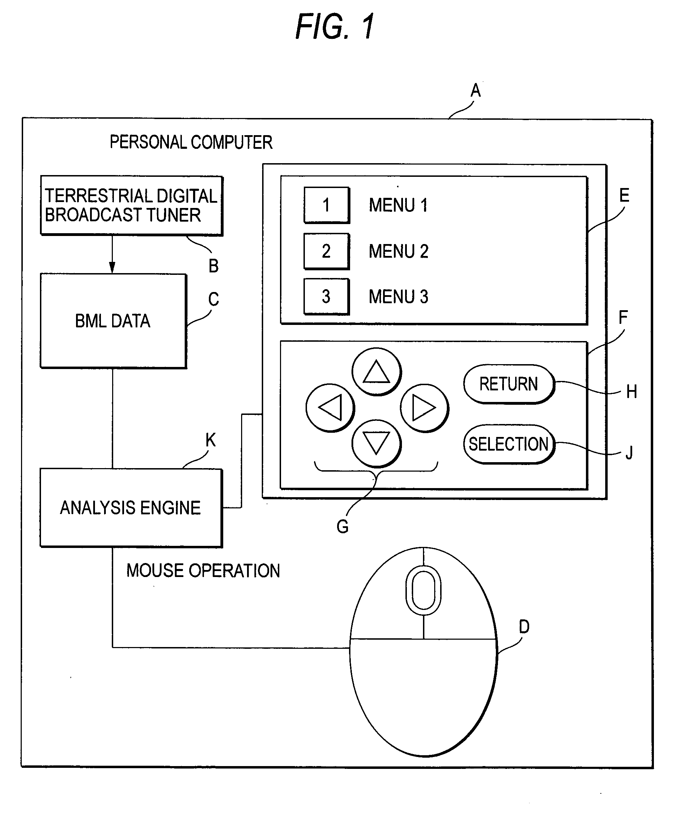

Fig. 1 is a block diagram illustrating a one-segment data receiving apparatus according to an embodiment of the invention.

As shown in Fig. 1, a one-segment data broadcast receiving apparatus A implemented in a personal computer. The personal computer is configured to receive one-segment data broadcast using a terrestrial digital broadcast tuner B which is provided therein or externally. Data broadcast can extract BML data C from a transport stream through a DSM-CC (Digital Storage Media-Command and Control) interface. The personal computer is connectable to a mouse D for obtaining an input operation. The mouse D outputs positional information on two-dimensional coordinates, a click operation, and a wheel operation. In addition, the personal computer is connectable to a display device and configured to display a display area E on a display screen of the display device to provide predetermined display. The personal computer is also configured to display an operation area F on the display screen of the display device. A cursor button display G for presenting up, down, right, and left cursor buttons, a return button display H, and a selection button display J are displayed in the operation area F. An analysis engine K implemented as software can be executed on the personal computer. The analysis engine K exhibits interactive display in the display area F based on the BML data C and operations of the mouse D.

At this time, based on the positional information, the personal computer determines whether the button display G, H, or J of the operation area F is operated in response to the click operation of the mouse D. Then, the personal computer notifies the analysis engine K of the click operation as the button operation. Moreover, in response to a wheel operation, the personal computer notifies the analysis engine K of the wheel operation of the mouse D as up and down cursor operations similar to the click operation for the up and down cursor button display G, irrespective of the positional information.

A method performed in this configuration corresponds to a method of receiving one-segment data broadcast. In addition, a program for executing such a method corresponds to a program for receiving one-segment data broadcast.

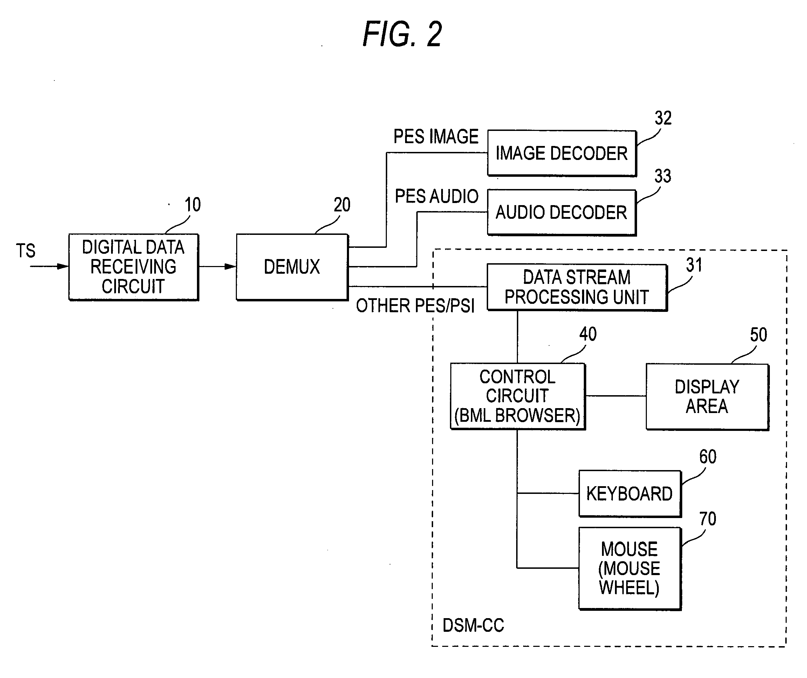

Fig. 2 is a block diagram illustrating the one-segment data broadcast receiving apparatus in detail.

A distal data receiving circuit 10 receives a TS stream constituted by TS packets and extracts the TS packets. The digital data receiving circuit 10 corresponds to the digital broadcast tuner, particularly, a receiving circuit of the one-segment broadcast. In the one-segment broadcast, digital contents such as a video, audio, or a still image are transmitted as the TS stream, and a stream of the data broadcast is extracted from the TS stream. A driver called the DSM-CC interface extracts the data broadcast from the TS stream. In terms of the overall apparatus, the personal computer executes the extraction.

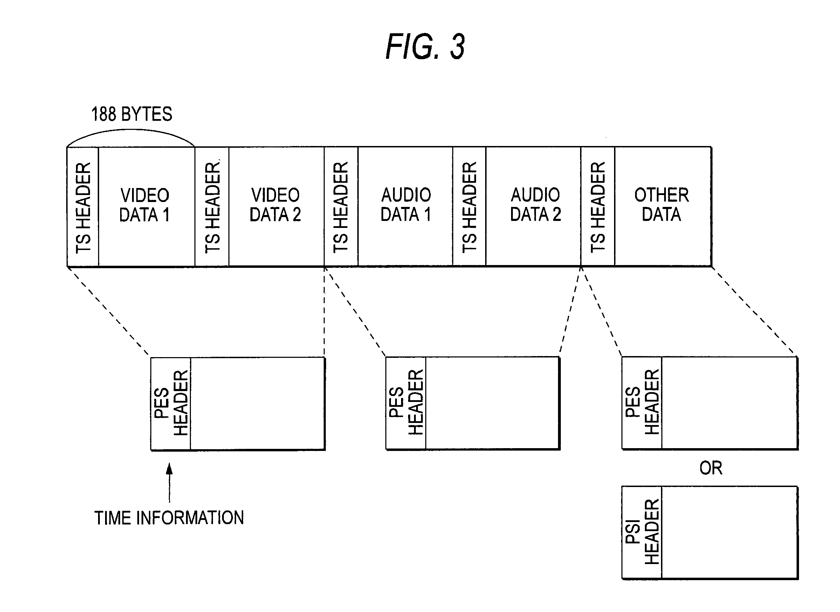

The received TS packet is output to a DEMUX (DeMultiplex) circuit 20. As shown in Fig. 3, the TS stream is a series of the 188-byte TS packet. Each of the TS packets includes a TS header and data. The TS header contains various types of information. Moreover, the TS header contains data information included in payload and various types of information for creating a PES or a PSI (Program Specific Information). Accordingly, as shown in the figure, the DEMUX circuit 20 analyzes the TS header contained in the TS packet to create the PES or the PSI by every type using the TS packet.

As simply shown in Fig. 3, the two first TS packets store two video data which are contained in one image PES. In addition, the two next TS packets store two audio data which are contained in one audio PES. The one final TS packet stores one data which is contained in other PES or PSI. The image PES and the audio PES each contain the two TS packets. In the TS reader, data indicating the correspondent relation is recorded. The foregoing packet is just simplified and the number of the TS packets contained in one FES is exceptionally different.

Normally, video digital contents complied with a MPEG standard include the image PES and the audio PES. In addition, in the data broadcast, the PES or the PSI of data is also included. This embodiment particularly relates to the data broadcast. BML data complied with a BML standard is extracted through the DSM-CC interface and output through a data stream processing unit 31. Moreover, when the image and audio of a video is reproduced, the image PES is input to an image decoder 32 to be converted into image signals and the audio PES is input to an audio decoder 33, and then the image decoder 32 and the audio decoder 33 are synchronized on the basis of synchronization information to reproduce the image and audio.

A control circuit 40 is configured to perform various types of control is connected to the data stream processing unit 31. The control circuit 40 includes a CPU, a RAM, and a ROM and is executed by hardware and software. The control circuit 40 operates a BML browser executed by the software, analyzes BML data that is obtained and output to the data steam processing unit 31, and exhibits a predetermined display on a display area 50. The CPU, the RAM, and the ROM for operating the Bt4L browser all constitute an analysis engine. The BML data is obtained based on the description for presenting interactive display. The control circuit 40 obtains input operations through a keyboard 60 and a mouse 70.

The display area E and the operation area F shown in Fig. 1 are defined on the display area 50. The above-described cursor button display G, H, and J are provided on the operation area F.

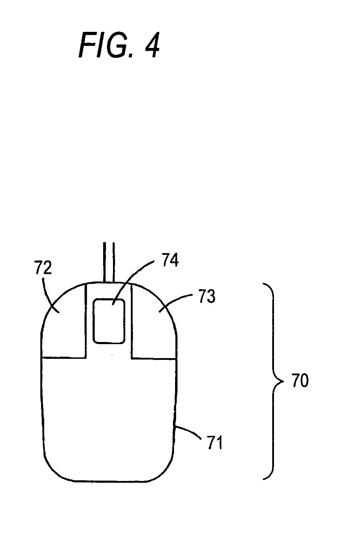

Fig. 4 is a top view illustrating the mouse 70. A left button 72 and a right button 73 are disposed on the front of the mouse body 71 and a wheel 74 is disposed between the left button 72 and the right button 73. The left button 72 and the right button 73 are provided to perform a click operation. The wheel 74 is provided to perform a scroll operation and can detect the scroll direction. The mouse 70 may not perform a 360° scroll operation but perform a pseudo scroll operation. In this case, the pseudo scroll operation is considered as the scroll operation in this embodiment.

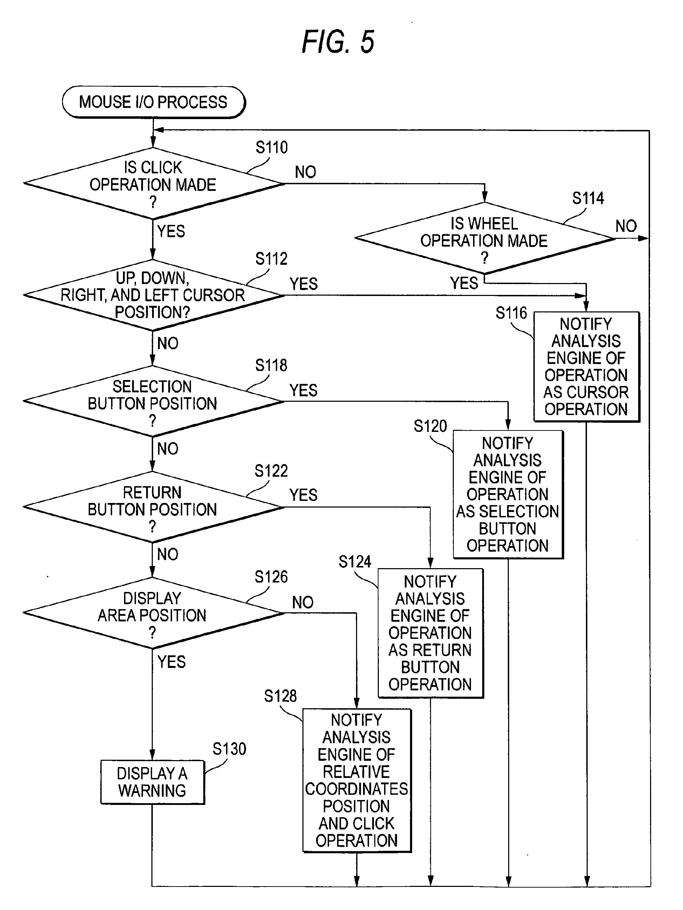

The control circuit 40 can detect coordinate information (which is the same as movement information on two-dimensional coordinate) on two-dimensional coordinates of the mouse 70 through an interface of hardware. Fig. 5 is a flowchart which shows a mouse interface process of detecting operations of the mouse. A program corresponding to such a flowchart is executed by the CPU of the control circuit 40.

In Step S110, the CPU determines whether the click operation is performed. The CPU is notified of the click operation through an interrupt process when the left button 72 or the right button 73 of the mouse 70 is clicked. The CPU determines whether the click operation is performed, on the basis of the notification of the click operation.

In response to the click operation, the CPU detects the position of the mouse 70. When the mouse 70 is moved on a plane surface, the mouse 70 outputs a movement distance of an X or Y direction as a signal, and the CPU is notified of the signal to the CPU by the interrupt process. The CPU separately performs a display control of the cursor interlocked with the mouse. In Step S112, the CPU determines whether a cursor display position is identical with one of the positions on the up, down, right, and left cursor button display G shown in Fig. 1.

When the click operation is performed on the position of the up and down cursor button display G, it is considered that a user operates the up and down cursor button in Step S116. The BML browser corresponding to the analysis engine is notified of the cursor operation. This operation is the cursor operation, but is not the click operation of designating the coordinates.

On the other hand, the click operation may be also performed on other than the up, down, right, left cursor button display. Accordingly, in Step S118, it is determined whether the cursor display position is identical with the position of the selection button display J shown in Fig. 1. If identical, it is considered that the user presses the selection button in Step S120. The BML browser as the analysis engine is notified of press operation. This operation is the press operation of the selection button, but is not the click operation of designating the coordinates.

In Step S122, it is determined whether the cursor display position is the position of the return button display H shown in Fig. 1. If identical, it is considered that the user presses the return button in Step S122. The BML browser as the analysis engine is notified of this press operation. This operation is the press operation of the return button, but is not the click operation of designating the coordinates.

The BML data of the data broadcast is made in the assumption that the cursor button operation, the return button operation, or the selection button operation is received but is not made in the assumption that a click operation of clicking the display area is received. However, if a user is accustomed to use a personal computer, such an operation to click the display area is intuitively made and it may take time for a user to understand that the operation is not a right operation. Accordingly, assuming that this operation of the user is made, it is determined whether the display area of the cursor is within the display area E in response to the click operation in Step S126. If the display area of the cursor at the time of the click operation is within the display area E, a warning is indicated on the display area 50 in order to give convenience to the user in Step S130. As an example of the warning, "A mouse operation within a display area is invalid in a one-segment data broadcast." can be exemplified.

In the Steps S116, 120, 124, 128, the personal computer delivers the coordinate information and the click operation of the clicked area in response to the click operation of the mouse. However, in the Step 130, i.e., if the determination in Step S126 indicates "No," the personal computer does not deliver the click operation to the analysis engine when detecting the click operation of the mouse button on the display area.

A user may click the display area in response to the interactive display, but such a click operation is not assumed in the one-segment data broadcast and is worthless. Therefore, according to the Step S130, the personal computer does not deliver the worthless operation and ignores the operation.

Basically, the one-segment data broadcast can be sufficiently browsed using the BML browser by the above-described operations. However, the user of the personal computer may feel like troublesome when the user moves a mouse cursor on the cursor display position to click the mouse button. Therefore, in this embodiment, after the determination that there is no click operation in Step S110. it is determined whether the wheel operation is performed in Step S114.

When the user operates the wheel 74 of the mouse 70, the CPU is notified of the wheel operation (a stroll direction and an amount of stroll) by the interrupt process, similar to the click operation. Subsequently, based on whether the notification is made, it is determined whether the wheel operation is performed in Step S114. If it is determined that the wheel operation is made, it is considered that the cursor operation in Step S116 is made. Then, the analysis engine is notified of the cursor operation. In addition, it is determined whether an operation of the up cursor button display is made or an operation of the down cursor button display is made according to the scroll direction of the wheel. It is determined how many times the cursor button is pressed according to the amount of scroll. Then, the analysis engine is notified of this operation.

It is intuitive that downward scrolling of the wheel 74 is processed as pressing the down cursor button, and upward scrolling of the wheel 74 is processed as pressing the up cursor button. The wheel 74 is designed to make a sound whenever the wheel 74 is scrolled at a predetermined angle. Accordingly, if one sound is processed as the pressing of the cursor button once to notify the analysis engine of the press operation, the user can intuitively feel press operation.

When the BML data is received and displayed by the BML browser in the data broadcast, menu display shown in Fig. 1 is presented. First, a menu 1 is highlighted and is in a selection state. At this time, when the user moves the mouse 70 to exhibit the cursor display position on the selection button display J and presses the left button 72, it is determined that the click operation is made in Step S110. In addition, it is determined that the cursor display position is not presented on the up, down, right, left cursor button display G in Step S112 and it is determined that the cursor display position is present on the selection button display J in Step S118. Then, the BML browser as the analysis engine is notified of the click operation as the selection button operation in Step 5120.

The control circuit 40 performs the mouse interface process and the BML browser in parallel. In addition, the control circuit 40 determines that the cursor is presented on the menu 1 at the time of performing the BML browser and performs a process of the menu 1 described in the EML data.

When the user moves the mouse 70 to exhibit the cursor display position on the down cursor button display G and presses the left button 72, it is determined that the click operation is made in Step S110 and it is determined that the cursor display position is presented on the up, down, right, left cursor button display G in Step S112. Then, the BML browser as the analysis engine is notified of the click operation as the cursor operation in Step S116. Specifically, the cursor display position is presented on the down cursor button display area in Step S112 and the 3ML browser is notified of the cursor operation as a down cursor press operation. As a result, the highlight of the menu 1 disappears and the menu 2 is highlighted so as to be selected.

Next, when the user downwardly scrolls the wheel 74 of the mouse 70, it is determined that the click operation is not present in Step S110 and it is determined that the wheel operation is made in Step S114. In addition, the pressing of the down cursor in Step S114 is determined as the press operation once according to the scroll direction and the amount of the scroll. The BML browser as the analysis engine is notified of the downward scrolling as the cursor operation in Step S116. In this way, the BML browser is notified of the downward scrolling as the press operation of the down cursor. Then, the highlight of the menu 2 disappears and the menu 3 is highlighted so as to be selected.

When the user downwardly scrolls the wheel 74 of the mouse 70, the BML browser is notified of the downward scrolling as the press operation of the down cursor. Accordingly, even though not shown in Fig. 1, the next screen for providing menus 4 to 6 is presented and the lowermost menu 6 is highlighted so as to be selected.

On the other hand, when the user upwardly scrolls the wheel 74 of the mouse 70, the BML browser is notified of the upward scrolling as the press operation of the up cursor. Accordingly, the previous screen for providing the menus 1 to 3 shown in Fig. 1 is presented and the lowermost menu 3 is highlighted so as to be selected.

Such a display area of the BML browser is just an example and may be changed depending on description of the BML data. However, since the user can scroll the wheel 74 instead of moving the cursor upwardly or downwardly, the user can intuitively feel and easily use the display area.

The scrolling of the wheel 74 of the normal mouse 70 has been described, but an operation of tilting the wheel 74 in a right or left direction may be made. The scroll operations of the wheel 74 are assigned to the up and down cursor operations. Moreover, the tilting operation of the wheel 74 in the right and left directions may be used instead of the right and left cursor operations. That is, the tilting operation of the wheel 74 of the mouse 70 in the right and left directions may be assigned to the click operations presented in the right and left cursor display area.

In this way, the personal computer serves as receiving the one-segment data broadcast using the terrestrial digital broadcast tuner B provided therein or attached to the cutside thereof. Moreover, the personal computer extracts the BML data C of the transport stream through the DSM-CC interface so as to perform browsing. The personal computer exhibits a predetermined display area including the display area E and the operation area F. Moreover, interactive display is presented on the operation area F which includes the cursor button display G corresponding to the up, down, right, and left cursor button, the return button display H, and the selection button display J by the software analysis engine K. Moreover, the personal computer considers the wheel operation of the mouse D as the click operation for the up and down cursor display G, irrespective of the positional information. In addition, the personal computer notifies the analysis engine K of the wheel operation as the press operation of the cursor, and the analysis engine K exhibits the corresponding interactive display.

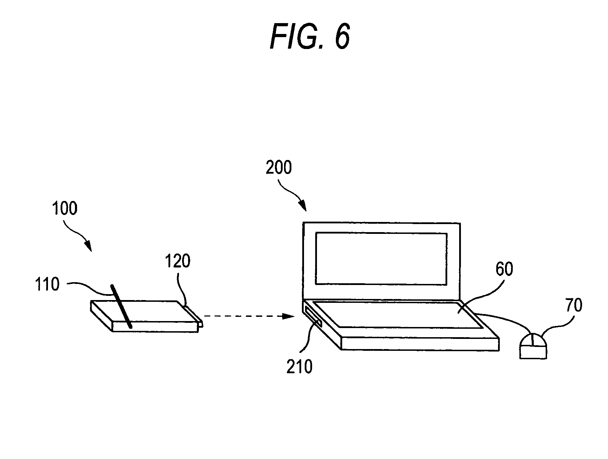

Fig. 6 is a schematic diagram illustrating a data receiving system according to another embodiment of the invention. In this another embodiment, the terrestrial digital broadcast tuner B is provided at an external of the personal computer A. As shown in Fig. 6, the data broadcast receiving system includes a data broadcast receiver 100 and a personal computer 200.

The data broadcast receiver 100 includes: an antenna 110 configured to receive a wireless signal of the data broadcast; and a connector 120 such as a USB (Universal Serial Bus) connector. The personal computer 200 includes an external port 210 such as a USB port and the keyboard 60 and is connectable to the mouse 70. The mouse 70 includes right and left buttons and a wheel as shown in Fig. 4. The connector 120 of the data broadcast receiver 100 is connectable to the external port 210 of the personal computer 210.

The data broadcast receiving system shown in Fig. 6 can implement the data broadcast receiving apparatus of the embodiment explained above. For example, the data broadcast receiver 100 has a function corresponding to the terrestrial digital broadcast tuner B (see Fig. 1), and the personal computer 200 has functions corresponding to other elements C to K. In this case, an interface provided in the personal computer 200 for the external connection of the data broadcast receiver 100 may be regarded as a function corresponding to a unit for receiving the data broadcast. Accordingly, both the data broadcast receiver 100 and the personal computer 200 may be configured to operate a function corresponding a single functional unit shown in Fig. 1.

According to the embodiments of the invention, the up, down, right, and left cursor button display, the return button display, and the selection button display are normally displayed on the operation area. The click operation of the mouse button on each display area is acquired. The menu display corresponds to the click operation of the up, down, right, and left cursor button display. In this embodiment, since the click operation is assigned to the up and down cursor operation in response to the wheel operation of the mouse wheel, the operation of moving the cursor up and down on the menu display area can be made by the wheel operation. Accordingly, it is possible to present the interactive display in response to the intuitive operation.

Accordingly, according to the embodiments of the invention, in case where the mouse with the wheel is used as an input device for the data broadcast receiving apparatus, the function of the wheel can be effectively delivered.

Incidentally, the technique of corresponding the wheel operation of the mouse wheel to the up and down cursor display area by exhibiting the interactive display for the broadcast is not limited to a substantial apparatus, but may function as a method. Accordingly, there may be provided a method of receiving the data broadcast.

That is, the technique is not necessarily limited to the substantial apparatus, the method may be used.

However, such a data broadcast receiving apparatus may be solely used or may be mounted in an apparatus. The invention is not limited thereto, but may be modified in various forms. Accordingly, the data broadcast receiving apparatus may be embodied by hardware or software.
Specifically, when the data broadcast receiving apparatus is embodied by software, a computer readable medium storing the software can be used.

Accordingly, there may be provided a computer readable medium storing the data broadcast receiving program.

The computer readable medium may be any type of media such as a magnetic recording medium, a magnetooptical recording medium, or any recording medium to be developed in the future. In addition, the computer readable medium may be naturally a reproduction medium such as a primary reproduction medium or a secondary reproduction medium. The reproductions such as a first reproduction and a second reproduction are equivalent to each other without any doubt. Moreover, the invention may be embodied using communication lines as a supply method.

The invention is not departed from the spirit of the invention even in a case where a part of the invention is embodied by software and a part of the invention is embodied hardware. Moreover, the invention may be embodied in a case where a part of the program is stored in a computer readable medium to be used, if necessary.

In a case where the invention is embodied by software, it is possible to also use hardware or an operating system. In addition, the invention can be embodied separately from the hardware and the operating system. For example, various calculation processes can be performed by using a predetermined function of the operating system or by the hardware without using the function. In addition, even though the invention is embodied using the operating system, the invention can be embodied using only the program when the program recorded in a computer readable medium is distributed.

When the invention is embodied by software, the invention can be embodied by a computer readable medium for recording the program, and can be naturally embodied by the program as it is. Moreover, the program itself is included in the invention.
[Fig. 1]
   A: PERSONAL COMPUTER
   B: TERRESTRIAL DIGITAL BROADCAST TUNER
   C: BML DATA
   K: ANALYSIS ENGINE
   E: MENU 1, MENU 2, MENU 3
   H: RETURN
   J: SELECTION
   (a): MOUSE OPERATION
[Fig. 2]
   10: DIGITAL DATA RECEIVING CIRCUIT
   (a): PES IMAGE
   (b): PES AUDIO
   (c): OTHER PES/PSI
   31: DATA STREAM PROCESSING UNIT
   32: IMAGE DECODER
   33: AUDIO DECODER
   40: CONTROL CIRCUIT (BML BROWSER)
   50: DISPLAY AREA
   60: KEYBOARD
   70: MOUSE (MOUSE WHEEL)
[Fig. 3]
   (a) : 188 BYTES
   (b) : TS HEADER
   (c) : VIDEO DATA 1
   (d): VIDEO DATA 2
   (e): AUDIO DATA 1
   (f): AUDIO DATA 2
   (g): OTHER DATA
   (h) PES HEADER
   (i): PSI HEADER
   (j) : TIME INFORMATION
[Fig. 5]
   (a): MOUSE I/O PROCESS
   S110: IS CLICK OPERATION MADE?
   S112: UP, DOWN, RIGHT, AND LEFT CURSOR POSITION?
   S114: IS WHEEL OPERATION MADE?
   S116: NOTIFY ANALYSIS ENGINE OF OPERATION AS CURSOR OPERATION
   S118: SELECTION BUTTON POSITION?
   S120: NOTIFY ANALYSIS ENGINE OF OPERATION AS SELECTION BUTTON OPERATION
   S122: RETURN BUTTON POSITION?
   S124: NOTIFY ANALYSIS ENGINE OF OPERATION AS RETURN BUTTON OPERATION
   S126: DISPLAY AREA POSITION?
   S128: NOTIFY ANALYSIS ENGINE OF RELATIVE COORDINATES POSITION AND CLICK OPERATION
   S130: DISPLAY A WARNING

## Claims

1. A data broadcast receiving apparatus configured to receive data broadcast and provide interactive display in response to an input operation on a personal computer, the personal computer connectable to a mouse and a display device having a display screen, the mouse configured to obtain the input operation and including a mouse button and a wheel that is operable to input scroll operation, said digital data receiving apparatus comprising:
a display processing unit configured to provide a display area and an operation area defined on the display screen, the display area reserved for a display of the data broadcast and the operation area reserved for a display of operation buttons; and
an input operation detecting unit configured to detect the input operation from the mouse to perform an interactive display based on a description of data contained in the data broadcast in response to the input operation of the mouse,
wherein the scroll operation of the wheel of the mouse is assigned to operations on at least one of the operation buttons.

2. The data broadcast receiving apparatus according to claim 1, wherein the display processing unit is configured to provide the display area in an upper portion of the display screen and the operation area in a lower portion of the display screen.

3. The data broadcast receiving apparatus according to claim 1,
wherein the display processing unit is configured to display the operation buttons to include up, down, left, and right cursor buttons, a return button, and a selection button,
wherein the scroll operation is assigned to operations on the up and down cursor buttons.

4. The data broadcast receiving apparatus according to claim 1 comprising an analysis engine configured to analyze the description of the data broadcast and control the display in response to the input operation, and
wherein, upon detecting an operation of the mouse, the input operation detecting unit sends the detection to the analysis engine to provide the display in the display area based on the display control by the analysis engine.

5. The data broadcast receiving apparatus according to claim 4, wherein in response to a click operation of the mouse button, the input operation detecting unit notifies the analysis engine of the click operation and coordinate information of an area at which the click operation has been made.

6. The data broadcast receiving apparatus according to claim 4, wherein upon detecting the click operation of the mouse button in the display area, the input operation detecting unit does not notify the analysis engine of the click operation.

7. The one-segment-data broadcast receiving apparatus according to claim 6, wherein upon detecting the click operation of the mouse button in the display area, the display processing unit displays a warning to indicate that the click operation is invalid.

8. A data broadcast receiving method capable of receiving data broadcast and providing interactive display in response to an input operation on a personal computer, the personal computer connectable to a mouse and a display device having a display screen, the mouse configured to obtain the input operation and including a mouse button and a wheel that is operable to input scroll operation, said digital data receiving method comprising:
providing a display area and an operation area defined on the display screen, the display area reserved for a display of the data broadcast and the operation area reserved for a display of operation buttons; and
performing an interactive display based on a description of data contained in the data broadcast in response to the input operation of the mouse,
wherein, when the scroll operation of the wheel is detected, the scroll operation of the wheel of the mouse is processed as operations on at least one of the operation buttons.

9. A computer readable medium storing a data broadcast receiving program for receiving data broadcast and providing interactive display in response to an input operation on a personal computer, the personal computer connectable to a mouse and a display device having a display screen, the mouse configured to obtain the input operation and including a mouse button and a wheel that is operable to input scroll operation, said data broadcast receiving program enabling the personal computer to execute:
providing a display area and an operation area defined on the display screen, the display area reserved for a display of the data broadcast and the operation area reserved for a display of operation buttons; and
performing an interactive display based on a description of data contained in the data broadcast in response to the input operation of the mouse,
wherein, when the scroll operation of the wheel is detected, the scroll operation of the wheel of the mouse is processed as operations on at least one of the operation buttons.
